(19) Europäisches Patentamt
European Patent Office
Office européen des brevets

(11) **EP 4 613 397 A1**

(12) **EUROPEAN PATENT APPLICATION**

(43) Date of publication:
**10.09.2025 Bulletin 2025/37**

(21) Application number: 25161576.1

(22) Date of filing: **04.03.2025**

(51) International Patent Classification (IPC):
**B21D 28/26** (2006.01)    **B21D 28/34** (2006.01)

(52) Cooperative Patent Classification (CPC):
**B21D 28/26; B21D 28/34**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.03.2024 KR 20240032261**

(71) Applicant: SAMSUNG SDI CO., LTD.
**Yongin-si, Gyeonggi-do 17084 (KR)**

(72) Inventors:
• **SONG, Sungsub**
**Yongin-Si Gyeonggi-do 17084 (KR)**
• **LEE, Jaewook**
**Yongin-Si Gyeonggi-do 17084 (KR)**
• **KIM, Du Hwan**
**Yongin-Si Gyeonggi-do 17084 (KR)**

(74) Representative: **Gulde & Partner**
**Patent- und Rechtsanwaltskanzlei mbB
Berliner Freiheit 2
10785 Berlin (DE)**

(54) **PUNCHING DEVICE AND PUNCHING METHOD USING SAME**

(57)     A punching device (300) comprising:
a die (310) configured to receive a substrate (340) corresponding to a cutting target disposed thereon;
a stripper (320) spaced from and facing the die (310), and configured to move toward the substrate (340) to pressurize and fix the substrate (340) on the die (310); and
a punch (330) configured to move toward the substrate (340) to cut the substrate (340) to form a scrap, wherein the punch (330) comprises a first cut portion (410) and a second cut portion (420) having different shapes from each other with respect to a movement axis (350) of the punch (330).

FIG. 3

**Description**

**BACKGROUND**

**1. Field**

Aspects of embodiments of the present disclosure relate to a punching device, and a punching method using the punching device.

**2. Description of the Related Art**

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A positive electrode plate and a negative electrode plate of a lithium-ion battery is manufactured by applying a cathode active material to a positive electrode current collector in the form of a metal thin-film (e.g., an aluminum foil), and applying an anode active material to a negative electrode current collector in the form of a metal thin-film (e.g., a copper foil). The electrode plate is manufactured through mixing, coating, and pressing processes to manufacture a roll-shaped metal thin-film substrate coated with an active material, and slitting and notching processes to cut a roll-shaped metal thin-film substrate in accordance with desired battery specifications. The electrode plates for which the notching process has been completed are separated from each other by cutting between the electrode plates.

The above information disclosed in this Background section is for enhancement of understanding of the background of the present disclosure, and therefore, it may contain information that does not constitute related (or prior) art.

**SUMMARY**

A punching device used in a notching process includes a punch including a push pin formed at an end portion thereof. A scrap formed when the electrode plate is cut may be pushed and discharged by the push pin. In this case, the push pin may come into contact with the electrode plate before the punch, causing damage to the electrode plate. In addition, a scrap that is not discharged may get caught in the punching device or may flow into a battery, thereby reducing the stability of the battery. For example, if scrap enters the inside of the battery, it causes serious problems with battery characteristics such as low voltage, short circuit, and poor capacity.

It is thus an object of the present disclosure to improve the stability of a manufactured battery.

The invention is set out in the appended set of claims. Embodiments of the present disclosure are directed to a punching device, and a punching method using the punching device.

These and other aspects and features of the present disclosure will be described in or will be apparent from the following description of embodiments of the present disclosure.

According to one or more embodiments of the present disclosure, a punching device includes: a die configured to receive a substrate corresponding to a cutting target disposed thereon; a stripper spaced from and facing the die, and configured to move toward the substrate to pressurize and fix the substrate on the die; and a punch configured to move toward the substrate to cut the substrate to form a scrap. The punch includes a first cut portion and a second cut portion having different shapes from each other with respect to a movement axis of the punch. In other words, due to the different shapes of the first and second cut portions, e.g. a left-right asymmetrical structure, an asymmetrical force (i.e. a shear force) is applied to the substrate prior to cutting of the scrap. The scrap is cut at an angle and substantially discharges in an inclined state with respect to a plane arranged orthogonally to the movement axis of the punch. Due to the inclined state, a width of the scrap along a width direction between the first cut portion and the second cut portion is reduced (compared to the width of the scrap a non-inclined state), thereby improving a discharge of the scrap and preventing the scrap from being stuck in the punching device and/or from entering the inside of the battery. The movement axis of the punch may be substantially orthogonal to the substrate. However, the present disclosure is not limited thereto and the movement axis of the punch may be arranged differently, e.g. (slightly) inclined a direction arranged orthogonally to the substrate. The first cut portion and the second cut portion may be integrally formed with the punch.

In an embodiment, the first cut portion and the second cut portion may be configured to cut a first portion and a second portion of the substrate, respectively, as the punch moves downward, and the scrap formed by cutting the first portion and the second portion may have a width between the first portion and the second portion.

In an embodiment, a timing at which the first portion is cut and a timing at which the second portion is cut may be different from each other. In other words, the first cut portion and the second cut portion contact the substrate at different time points when the punch moves towards the substrate. This allows to apply an asymmetrical force on the substrate prior to cutting, e.g. a shear force, so that the scrap discharges in an inclined manner with respect to the width direction.

In an embodiment, the timing at which the first portion is cut and the timing at which the second portion is cut may be different from each other according to or based on a height difference between sidewalls of the first cut portion and the second cut portion. The height direction may be orthogonal to the width direction. In an embodiment, the height direction may be parallel to the movement axis of the punch.

In an embodiment, a width between the first portion and the second portion may be four times or more the height difference between the sidewalls of the first cut portion and the second cut portion. For example, the width between the first portion and the second portion may be at least 4.5 times, at least five times, at least 5.5 times or more the height difference between the sidewalls of the first cut portion and the second cut portion.

In an embodiment, the height difference between the sidewalls of the first cut portion and the second cut portion may be between 0.8 mm and 1.2 mm. For example, the height difference between the sidewalls of the first cut portion and the second cut portion may be at least 0.85 mm, at least 0.9 mm or at least 0.95 and/or lower than 1.15 mm, lower than 1.1 mm or lower than 1.10 mm.

In an embodiment, the width between the first portion and the second portion may be between 2 mm and 6 mm. For example, the width between the first portion and the second portion may be at least 2.5 mm, at least 3 mm or at least 3.5 mm and/or lower than 5.5 mm, lower than 5 mm or lower than 4.5 mm.

In an embodiment, the first cut portion may include: a first sidewall parallel to the movement axis of the punch; and a first cut surface extending from the first sidewall in a width direction of the punch. The second cut portion may include: a second sidewall parallel to the movement axis of the punch; and a second cut surface extending from the second sidewall in the width direction of the punch. The height of the first and second side walls may be different.

In an embodiment, each of an angle between the first sidewall and the first cut surface of the first cut portion and an angle between the second sidewall and the second cut surface of the second cut portion may be 90 degrees. In other words, the first cut surface and the second cut surface may be formed as a stepped structure. A stepped structure is simple to manufacture and provides a robust and durable punch.

In an embodiment, each of an angle between the first sidewall and the first cut surface of the first cut portion and an angle between the second sidewall and the second cut surface of the second cut portion may be less than 90 degrees, and the first cut surface and the second cut surface may be recessed toward an inside of the punch. In other words, the first cut surface and the second cut surface may be formed as a two-tip structure forming a tip at each of the first and second sidewalls. A two-tip structure is simple to manufacture and allows to cut the scrap at (relatively) low pressure. Compared to a flat surface of the punch, the applied pressure is concentrated on both tips such that a lower pressure (or force) is required to cut the scrap.

In an embodiment, each of an angle between the first sidewall and the first cut surface of the first cut portion and an angle between the second sidewall and the second cut surface of the second cut portion may be less than 90 degrees, and at least one of the first cut surface or the second cut surface may be in the form of a curved surface recessed toward an inside of the punch. A curved surface structure is simple to manufacture (e.g. by drilling) and allows to cut the scrap at (relatively) low pressure. Compared to a flat surface of the punch, the applied pressure is partially concentrated on at least a tip of the curved surface such that a lower pressure (or force) is required to cut the scrap.

In an embodiment, an angle between the first sidewall and the first cut surface of the first cut portion may be 90 degrees or more, and an angle between the second sidewall and the second cut surface of the second cut portion may be less than 90 degrees. In other words, the first cut surface and the second cut surface may be formed as an inclined structure. An inclined structure is simple to manufacture and provides a robust and durable punch.

In an embodiment, the stripper may have a punch accommodation portion configured to accommodate the punch, and the punch accommodation portion may have a shape of a through-hole through which the punch may be configured to be inserted via the stripper. The shape of the sidewalls of the accommodation portion may correspond to the shape of the sidewalls of the punch (including a gap for allowing movement of the punch into and/or through the accommodation portion). In other words, when the punch is accommodated in the accommodation portion, the substrate corresponding to the accommodation portion is substantially covered by the punch. Advantageously, foreign particles may not fall into gaps between the sidewalls of the stripper and the punch such that contamination of the punching device and/or the battery through foreign particles is reduced.

In an embodiment, the die may include a discharge portion extending in a direction corresponding to the punch accommodation portion to communicate with the punch accommodation portion, and the scrap may be cut to be discharged through the discharge portion in an inclined state. The scrap may be cut to be discharged through the discharge portion in an inclined state. The discharge portion may be a through-hole in the die along the movement axis of the punch. The size and arrangement of the discharge portion may correspond to the punch accommodation portion and/or at least to a cutting portion defined by the area spanned by the first portion of the substrate cut by the first cut portion of the punch and the second portion of the substrate cut by the second cut portion of the punch. The first cut portion and a second cut portion may be configured such that the scrap is cut to be discharged through the discharge portion in an inclined state.

According to one or more embodiments of the present disclosure, a punching method includes: disposing a substrate corresponding to a cutting target on a die; lowering a stripper to pressurize and fix the substrate disposed on the die; cutting the substrate by using a punch; and discharging a scrap formed by the cutting of the substrate. The punch includes a first cut portion and a second cut portion having different shapes from each other with respect to a movement axis of the punch. The above-mentioned punching device may be used for the punching method. The technical effects obtained with the punching device can be achieved analogously with the punching method. The disclosed combinations of features of the punching device can be analogously applied to the punching method. An encompassing repetitive description of the features and technical effects in view of the punching method is thus omitted.

In an embodiment, a first height of a sidewall of the first cut portion may be different from a second height of a sidewall of the second cut portion.

In an embodiment, the cutting of the substrate may include: lowering the punch; cutting a first portion of the substrate by the first cut portion; and cutting a second portion of the substrate by the second cut portion. The first portion and the second portion may be cut at different timings from each other according to a height difference between the first cut portion and the second cut portion, such that the scrap may be discharged in an inclined state.

In an embodiment, a width between the first portion and the second portion may be four times or more the height difference between the first cut portion and the second cut portion.

In an embodiment, the height difference between the first cut portion and the second cut portion may be 0.8 mm to 1.2 mm.

In an embodiment, a width between the first portion and the second portion may be 2 mm to 6 mm.

According to some embodiments of the present disclosure, a timing at which the substrate is cut by the first cut portion and a timing at which the substrate is cut by the second cut portion may be different from each other, such that the scrap may fall off in an inclined state. Accordingly, even in a case where the width of the discharge portion and the width of the scrap correspond to the same or approximate value, the scrap may be smoothly discharged through the discharge portion.

According to some embodiments of the present disclosure, by forming the angle of the contact region between the cut portion of the punch and the substrate at an acute angle, an area where the cut portion and the substrate are in contact with each other may be minimized or reduced. Accordingly, a structure for transmitting a shear force to the substrate may be formed.

According to some embodiments of the present disclosure, each of the angle formed by the first sidewall and the first cut surface and the angle formed by the second sidewall and the second cut surface may be formed at 90 degrees, such that the structure for pushing out the scrap may be formed.

According to some embodiments of the present disclosure, by appropriately changing the curvature of the first cut surface and/or the second cut surface that is recessed toward the inside of the punch, the structure for the first cut portion and/or the second cut portion to transmit a shear force to the substrate may be formed.

According to some embodiments of the present disclosure, problems that may occur in a case where the scrap is not smoothly discharged and is piled up in the punching device may be prevented. For example, low voltage defects, short circuit defects, and capacity defects, which may occur in a case where the scrap flows into the battery, may be prevented.

According to some embodiments of the present disclosure, the scrap may be smoothly discharged by simply changing the structure of the cut surface without expanding the diameter of the discharge portion.

However, aspects and features of the present disclosure are not limited to those described above, and other aspects and features not mentioned will be clearly understood by a person skilled in the art from the detailed description, described below.

## BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:

FIG. 1 illustrates an exploded perspective view of a punching device according to an embodiment of the present disclosure;
FIG. 2 illustrates an example of a punching device according to an embodiment of the present disclosure;
FIG. 3 illustrates an example of a punching device according to an embodiment of the present disclosure;
FIG. 4 illustrates an enlarged view showing a punch of FIG. 3 according to an embodiment of the present disclosure;

FIG. 5 illustrates an example of a punching device according to an embodiment of the present disclosure;

FIG. 6 illustrates an enlarged view showing a punch of FIG. 5 according to an embodiment of the present disclosure;

FIG. 7 illustrates an example of a punching device according to an embodiment of the present disclosure;

FIG. 8 illustrates an enlarged view showing a punch of FIG. 7 according to an embodiment of the present disclosure;

FIG. 9 illustrates an example of a punching device according to an embodiment of the present disclosure;

FIG. 10 illustrates an enlarged view showing a punch of FIG. 9 according to an embodiment of the present disclosure;

FIG. 11 illustrates a ratio between a height difference of a first cut portion and a second cut portion and a width of a scrap according to an embodiment of the present disclosure; and

FIG. 12 illustrates a flowchart showing an example of a punching method according to an embodiment of the present disclosure.

## DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

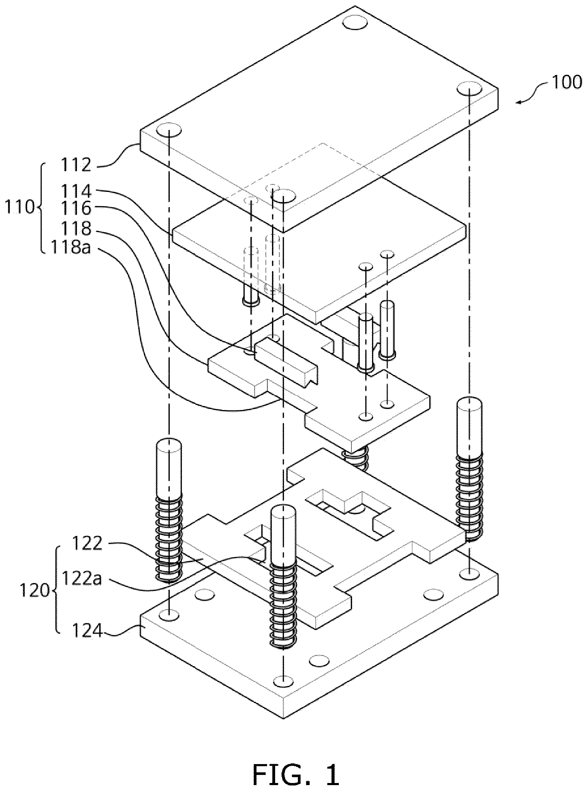

FIG. 1 illustrates an exploded perspective view of a punching device 100 according to an embodiment of the present disclosure.

The punching device 100 according to an embodiment of the present disclosure may be a punching mold that may blank a continuously provided metal thin-film substrate, and cut the thin-film substrate into electrode plates satisfying a desired standard (e.g., a predetermined standard). In some embodiments, the punching device 100 may be a punching mold that may cut between the electrode plates in order to separate the electrode plates that are cut in accordance with standard (e.g., the predetermined standard).

Referring to FIG. 1, the punching device 100 may include a first mold 110 and a second mold 120. The first mold 110 may refer to an upper mold. The second mold 120 may refer to a lower mold. Hereinafter, an upper portion may be a direction toward the first mold 110 (or a portion thereof), and a lower portion may be a direction toward the second mold 120 (or a portion thereof). In an embodiment, a substrate coated with an active material may be provided to the punching device 100.

The first mold 110 may include a first base plate 112, a stripper plate 114, a punch 116, and a stripper 118. The stripper plate 114 may be fixedly connected to (e.g., coupled to or attached to) the lower portion of the first base plate 112. The stripper 118 may be connected to (e.g., coupled to or attached to) the stripper plate 114. For example, a stripper connection pin may connect the stripper 118 to the stripper plate 114. The stripper 118 may include a punch accommodation portion 118a. The punch 116 may be connected to (e.g., coupled to or attached to) the stripper plate 114, and may be accommodated in the punch accommodation portion 118a of the stripper 118.

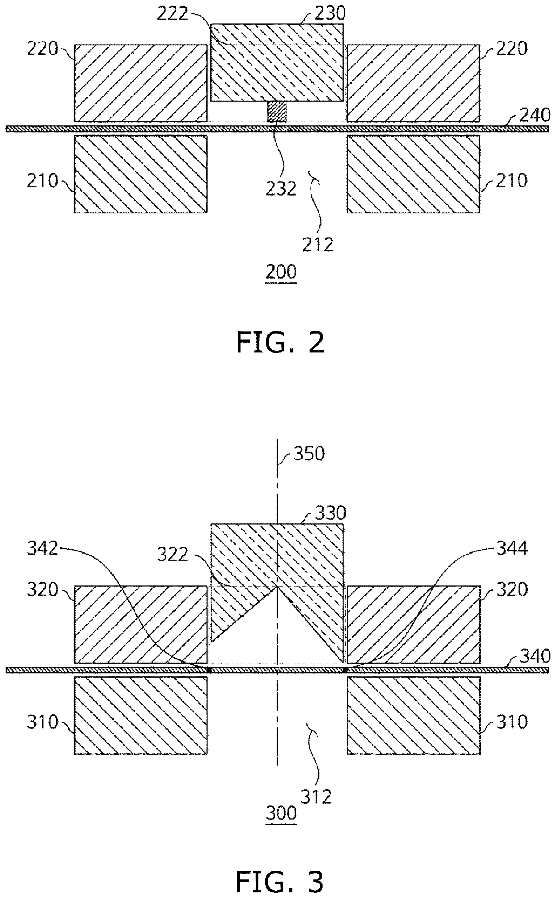

A cut portion of an asymmetric shape may be formed on the lower surface of the punch 116 with respect to a direction of a movement axis of the punch 116. Some examples of the shape of the punch 116 are described in more detail below with reference to FIGS. 3 to 10.

The second mold 120 may include a second base plate 124 and a die 122. The die 122 may be fixedly connected to (e.g., coupled to or attached to) the second base plate 124. The die 122 may be fixedly connected to (e.g., coupled to or attached to) the upper portion of the second base plate 124. The die 122 may include a discharge portion 122a.

The first mold 110 and the second mold 120 may be spaced apart from each other, and may be connected to each other. For example, a base guide post may connect the first base plate 112 to the second base plate 124, such that the first mold 110 and the second mold 120 are connected to (e.g., coupled to or attached to) each other. However, the present disclosure is not limited thereto, and the punching device may additionally include other components in the coupling structure between the first mold 110 and the second mold 120 for cutting the metal thin-film substrate.

The first mold 110 may descend or ascend toward the second mold 120. In a case where the first mold 110 descends, the stripper 118 may come into contact with the die 122. In a case where the metal thin-film substrate (e.g., the electrode plate) is disposed on the die 122, the stripper 118 may be fixed to be in contact with the substrate (e.g., the electrode plate). In some embodiments, in a case where the first mold 110 descends, the punch 116 may descend and be inserted into the discharge portion 122a. In a case where the metal thin-film substrate (e.g., the electrode plate) is disposed on the die 122, the punch 116 may cut the metal thin-film substrate (e.g., the electrode plate). A scrap formed in a case where the metal thin-film substrate (e.g., the electrode plate) is cut may be discharged through the discharge portion 122a.

The discharge portion 122a and/or the punch 116 may be formed in a shape corresponding to a desired standard (e.g., a predetermined standard). For example, the discharge portion 122a and/or the punch 116 may correspond to the cut shape of the metal thin-film substrate. Similarly, the punch accommodation portion 118a may be formed to correspond to the shape of the punch to accommodate the punch 116.

Referring to FIG. 1, one side of the punch accommodation portion 118a is shown as an open structure, but the present disclosure is not limited thereto. For example, the punch accommodation portion 118a may be in the form of a through-hole through which the punch 116 is inserted via the stripper 118.

In addition to the above, the punching device 100 illustrated in FIG. 1 may further include a configuration used for manufacturing an electrode plate for a secondary battery.

FIG. 2 illustrates an example of a punching device 200 according to an embodiment of the present disclosure.

In an embodiment, the punching device 200 includes a die 210, a stripper 220, and a punch 230. The stripper 220 may be spaced apart from the upper portion of the die 210 so as to face the die 210. The stripper 220 may include a punch accommodation portion 222 for accommodating the punch 230. The punch 230 may move upward or downward through the punch accommodation portion 222.

In an embodiment, punch 230 may include a push pin 232. The push pin 232 may be formed on the lower surface of the punch 230, and may first contact the substrate 240 disposed on the die 210 in a case where the punch 230 moves downward. The substrate 240 may refer to a metal thin-film before being coated with an active material. The substrate 240 may refer to an electrode plate coated with an active material.

In an embodiment, the punching device 200 cuts the substrate 240. The substrate 240 corresponding to a cutting target is disposed on the upper surface of the die 210. Thereafter, the stripper 220 moves downward toward the substrate 240, and pressurize and fix the substrate 240. FIG. 2 illustrates an example in which the substrate 240 is pressurized and fixed in a state where the stripper 220 moves downward.

Thereafter, the punch 230 may move downward through the punch accommodation portion 222. In this case, the push pin 232 formed on the lower surface of the punch 230 may first contact the substrate 240. In a case where the punch 230 additionally moves downward, the push pin 232 may be drawn into the inside of the punch 230, and the punch 230 and the substrate 240 come into contact with each other, causing the substrate 240 to be cut. A scrap formed in a case where the substrate 240 is cut may be pushed by the push pin 232, and discharged through the discharge portion 212.

In a case where the scrap formed when the substrate is cut is not discharged properly, the scrap may get caught in the punching device, or piles up in the discharge portion may be caused. In this case, the scrap may flow into the battery, causing low voltage defects, short circuit defects, and capacity defects. As such, the push pin 232 may be formed on the lower surface of the punch 230, as shown in the example of FIG. 2. However, even in this case, the scrap may fall off vertically through the discharge portion 212. The push pin 232 may first contact the substrate 240 before the punch 230 contacts the substrate 240, causing a risk of damage (or damage) to the substrate 240.

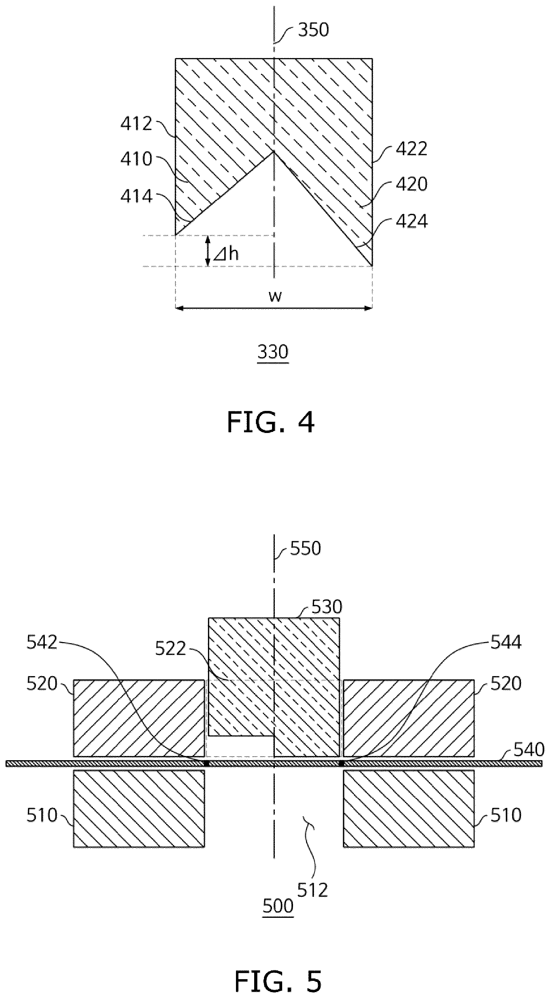

FIG. 3 illustrates an example of a punching device 300 according to an embodiment of the present disclosure. FIG. 4 illustrates an enlarged view showing a punch 330 of FIG. 3 according to an embodiment of the present disclosure.

Referring to FIG. 3, the punching device 300 includes a die 310, a stripper 320, and a punch 330. The stripper 320 is spaced apart from the upper portion of the die 310 so as to face the die 310. The stripper 320 may include a punch accommodation portion 322 for accommodating the punch 330. The punch 330 may move upward or downward through the punch accommodation portion 322.

In an embodiment, the punching device 300 cuts the substrate 340. In some embodiments, a substrate 340 corresponding to a cutting target is disposed on the upper surface of the die 310. Thereafter, the stripper 320 moves downward toward the substrate 340, and pressurizes and fixes the substrate 340. In some embodiments, the punch 330 may cut the substrate 340 by moving downward, so as to pass through the punch accommodation portion 322. A scrap formed in a case where the substrate 340 is cut may be discharged through a discharge portion 312 formed in the die 310.

In an embodiment, the discharge portion 312 and/or the punch 330 may be formed in a suitable shape corresponding to a desired standard (e.g., a predetermined standard). For example, the discharge portion 312 and/or the punch 330 may have a shape corresponding to the cut shape of the substrate 340. Similarly, the punch accommodation portion 322 may be formed to correspond to the shape of the punch 330 so as to accommodate the punch 330. Accordingly, the shape of the scrap formed by the punch 330 may also correspond to the shape of the discharge portion 312.

In an embodiment, the punch 330 may include cut portions that have asymmetrical shapes with respect to the direction of the movement axis 350 of the punch 330. For example, a first cut portion of the punch 330 may correspond to the left side of the punch 330 with respect to the direction of the movement axis 350 of the punch 330, and a second cut portion of the punch 330 may correspond to the right side with respect to the direction of the movement axis 350 of the punch 330. Both sidewalls of the first cut portion and the second cut portion may be formed to have different heights from each other. Accordingly, the timings at which the substrate 340 is cut by the cut portions on opposite sides of the punch 330 may be different from each other. For example, the timing at which a first portion 342 of the substrate 340 is cut by the first cut portion of the punch 330 may be different from the timing at which a second portion 344 of the substrate 340 is cut by the second cut portion of the punch 330.

FIG. 4 illustrates an enlarged view of the punch 330 of FIG. 3. Referring to FIG. 4, the punch 330 includes the first cut portion 410 and the second cut portion 420 formed in different shapes from each other. The first cut portion 410 and the second cut portion 420 may be arranged side-by-side with each other in the width direction of the punch 330.

In an embodiment, the first cut portion 410 may include a first sidewall 412 parallel to or substantially parallel to the movement axis 350 of the punch 330, and a first cut surface 414 extending from the first sidewall 412. The first cut surface 414 may be bent and extended from the first sidewall 412 in the width direction of the punch 330, while forming an angle (e.g., a certain or predetermined angle) therebetween. The angle formed between the first sidewall 412 and the first cut surface 414 may be less than 90 degrees.

Similarly, the second cut portion 420 may include a second sidewall 422 parallel to or substantially parallel to the movement axis 350 of the punch 330, and a second cut surface 424 bent and extended from the second sidewall 422 in the width direction of the punch 330 while forming an angle (e.g., a certain or predetermined angle) therebetween. The angle formed between the second sidewall 422 and the second cut surface 424 may be less than 90 degrees. The first cut surface 414 and the second cut surface 424 may each constitute a plane, and may each form a shape or a surface that is recessed toward the inside of the punch 330 with respect to the movement axis 350 of the punch 330.

In an embodiment, the height of the first sidewall 412 of the first cut portion 410 may be different from the height of the second sidewall 422 of the second cut portion 420. Accordingly, a height difference ($\Delta$h) may be formed between the first sidewall 412 and the second sidewall 422. The height difference ($\Delta$h) may be defined between the planes constituted by each of the first cut surface 414 and the second cut surface 424.

In an embodiment, the timing at which the substrate is cut by the first cut portion 410 may be different from the timing at which the substrate is cut by the second cut portion 420. In some embodiments, as the punch 330 moves downward, the second cut portion 420, which has a higher sidewall height, may first cut the substrate while coming into contact with the substrate. Thereafter, as the punch 330 additionally moves downward, the first cut portion 410 may cut the substrate while coming into contact with the substrate. In some embodiments, after the second portion of the substrate (e.g., the second portion 344 in FIG. 3) is cut by the second cut portion 420, the first portion of the substrate (e.g., the first portion 342 in FIG. 3) may be cut by the first cut portion 410. In this case, a scrap having a width (w) between the first portion and the second portion may be formed.

FIG. 4 illustrates that the height of the second cut portion 420 is greater (e.g., higher or larger) than the height of the first cut portion 410, but the present disclosure is not limited thereto, and the height of the first cut portion 410 may be greater (e.g., higher or larger) than the height of the second cut portion 420. In some embodiments, after the first portion of the substrate (e.g., the first portion 342 in FIG. 3) is cut by the first cut portion 410, the second portion of the substrate (e.g., the second portion 344 of FIG. 3) may be cut by the second cut portion 420.

FIG. 4 illustrates that a width ratio of the first cut portion 410 to the second cut portion 420 is 1:1, but the present disclosure is not limited thereto. For example, in some embodiments, the height difference ($\Delta$h) may be formed between the first cut portion 410 and the second cut portion 420, each of the angle formed by the first sidewall 412 and the first cut surface 414 and the angle formed by the second sidewall 422 and the second cut surface 424 may be less than 90 degrees, and the widths of the two cut portions may be appropriately modified as needed or desired. For example, the width ratio of the first cut portion 410 to the second cut portion 420 may be different from 1:1, e.g. 1.5:1, 2:1, 2.5:1 or 3:1 or vice versa.

FIG. 4 illustrates that the first cut surface 414 and the second cut surface 424 are connected to each other in a V-shape, but the present disclosure is not limited thereto. For example, the inclination of the first cut surface 414 and/or the second cut surface 424 may be variously modified at a suitable point (e.g., at a specific or predetermined point) inside the punch 330. In some embodiments, each of the angle formed by the first sidewall 412 and the first cut surface 414 and the angle formed by the second sidewall 422 and the second cut surface 424 forms an acute angle, and the structure of the cut surface may be variously modified.

As such, the timing at which the substrate is cut by the first cut portion 410 and the timing at which the substrate is cut by the second cut portion 420 may be different from each other, such that the scrap may fall off in an inclined state. Accordingly, even in a case where the width of the discharge portion and the width of the scrap correspond to the same or approximate value as each other, the scrap may be smoothly discharged through the discharge portion.

In some embodiments, by forming the angle of the contact region between the cut portion of the punch and the substrate at an acute angle, the area where the cut portion and the substrate are in contact with each other may be minimized or reduced. Accordingly, a structure for transmitting a shear force to the substrate may be formed.

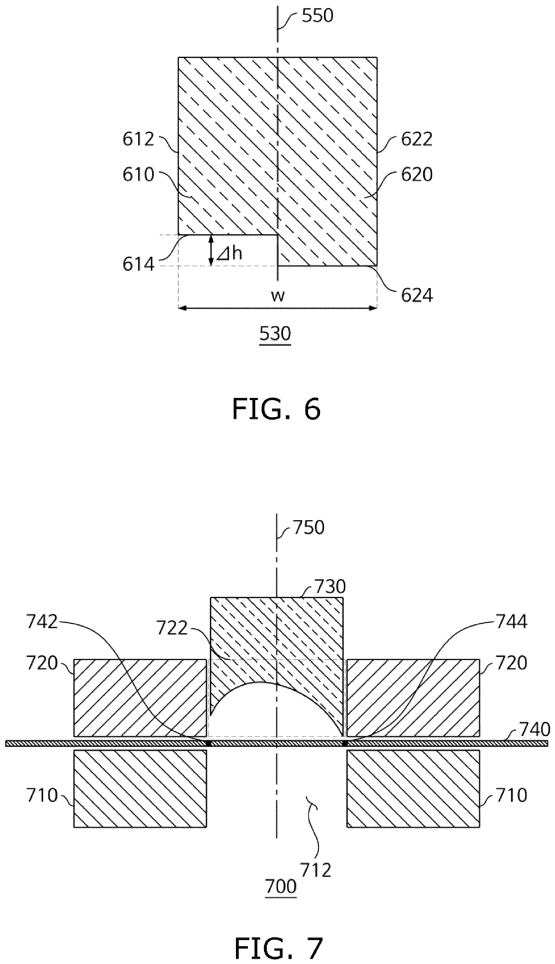

FIG. 5 illustrates an example of a punching device 500 according to an embodiment of the present disclosure. FIG. 6 illustrates an enlarged view showing a punch 530 of FIG. 5 according to an embodiment of the present disclosure.

Referring to FIG. 5, the punching device 500 includes a die 510, a stripper 520, and a punch 530. Hereinafter with reference to FIGS. 5 and 6, redundant description as those described above with respect to the other figures may not be repeated.

Referring to FIGS. 5 and 6, the punch 530 includes a first cut portion 610 and a second cut portion 620 formed in different shapes from each other. The first cut portion 610 and the second cut portion 620 may be arranged side-by-side with each other in the width direction of the punch 530.

In an embodiment, the first cut portion 610 may include a first sidewall 612 parallel to or substantially parallel to the movement axis 550 of the punch 530, and a first cut surface 614 extending from the first sidewall 612. The first cut surface 614 may extend from the first sidewall 612 in the width direction of the punch 530. The angle formed between the first sidewall 612 and the first cut surface 614 may be 90 degrees.

Similarly, the second cut portion 620 may include a second sidewall 622 parallel to or substantially parallel to the movement axis 550 of the punch 530, and a second cut surface 624 extending from the second sidewall 622 in the width direction of the punch 530. The angle formed between the second sidewall 622 and the second cut surface 624 may be 90 degrees.

In an embodiment, the height of the first sidewall 612 of the first cut portion 610 may be different from the height of the second sidewall 622 of the second cut portion 620. Accordingly, a height difference ($\Delta h$) may be formed between the first sidewall 612 and the second sidewall 622.

In an embodiment, a step may be formed between the first cut surface 614 and the second cut surface 624. For example, by forming the height difference ($\Delta h$) between the first sidewall 612 and the second sidewall 622, a step having the height difference ($\Delta h$) may be formed between the first cut surface 614 and the second cut surface 624.

The first cut surface 614 and the first sidewall 612 form an angle of 90 degrees up to a point (e.g., a specific or predetermined point) inside the punch 530, and the inclination of the surface after the point may be changed. Similarly, the second cut surface 624 and the second sidewall 622 form an angle of 90 degrees up to a point (e.g., a specific or predetermined point) inside the punch 530, and the inclination of the surface after the point may be changed. In some embodiments, each of the angle formed by the first sidewall 612 and the first cut surface 614 and the angle formed by the second sidewall 622 and the second cut surface 624 forms 90 degrees, and the structure of the cut surface may be variously modified as needed or desired.

In an embodiment, the timing at which the substrate is cut by the first cut portion 610 may be different from the timing at which the substrate is cut by the second cut portion 620. In some embodiments, as the punch 530 moves downward, the second cut portion 620, which has a greater (e.g., a higher or a larger) sidewall height, may cut the substrate while coming into contact with the substrate. Thereafter, as the punch 530 additionally moves downward, the first cut portion 610 may cut the substrate while coming into contact with the substrate. In some embodiments, after the second portion of the substrate (e.g., the second portion 544 in FIG. 5) is cut by the second cut portion 620, the first portion of the substrate (e.g., the first portion 542 of FIG. 5) may be cut by the first cut portion 610. In this case, a scrap having a width (w) between the first portion and the second portion may be formed.

Similarly to that described above with reference to FIG. 4, FIG. 6 illustrates that the height of the second cut portion 620 is greater (e.g., higher or larger) than the height of the first cut portion 610, but the present disclosure is not limited thereto, and the height of the first cut portion 610 may be greater (e.g., higher or larger) than the height of the second cut portion 620. FIG. 6 also illustrates that the width ratio of the first cut portion 610 to the second cut portion 620 is 1:1, but the present disclosure is not limited thereto. For example, the height difference ($\Delta h$) may be formed between the first cut portion 610 and the second cut portion 620, each of the angle formed by the first sidewall 612 and the first cut surface 614 and the angle formed by the second sidewall 622 and the second cut surface 624 may 90 degrees or less, and the widths of the two cut portions may be appropriately modified as needed or desired (cf. description of FIG. 4).

In some embodiments, each of the angle formed by the first sidewall 612 and the first cut surface 614 and the angle formed by the second sidewall 622 and the second cut surface 624 forms 90 degrees, and the structure of the cut surface may be variously modified as needed or desired.

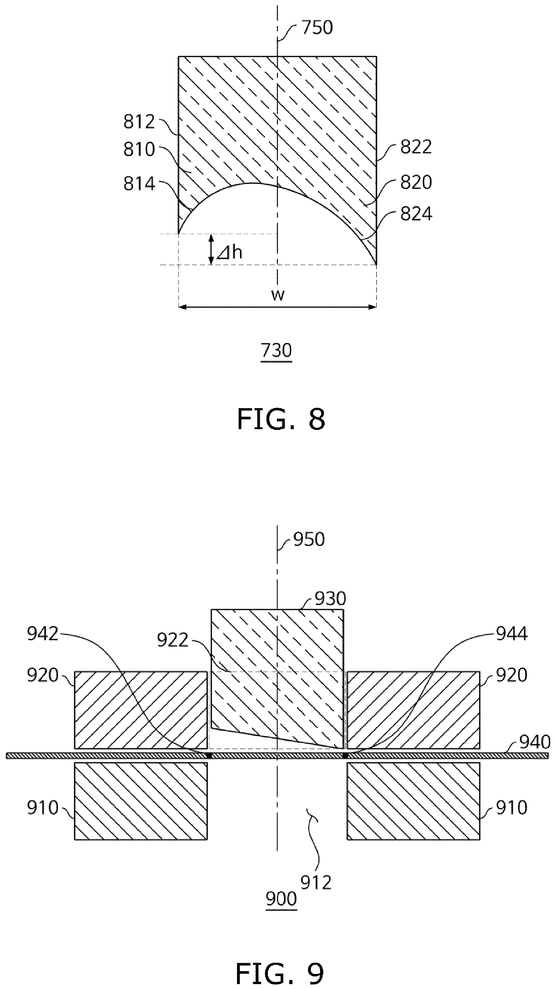

FIG. 7 illustrates an example of a punching device 700 according to an embodiment of the present disclosure. FIG. 8 illustrates an enlarged view of a punch 730 of FIG. 7 according to an embodiment of the present disclosure.

Referring to FIG. 7, the punching device 700 includes a die 710, a stripper 720, and a punch 730. Hereinafter with reference to FIGS. 7 and 8, redundant description as those described above with respect to the other figures may not be repeated.

Referring to FIGS. 7 and 8, the punch 730 includes a first cut portion 810 and a second cut portion 820 formed in different shapes from each other. The first cut portion 810 and the second cut portion 820 may be arranged side-by-side with each other in the width direction of the punch 730.

In an embodiment, the first cut portion 810 may include a first sidewall 812 parallel to or substantially parallel to a movement axis 750 of the punch 730, and a first cut surface 814 extending from the first sidewall 812 in the width direction of the punch 730. The first cut surface 814 may be in the form of a curved surface that is recessed toward the inside of the punch 730 with respect to the movement axis 750 of the punch 730. Accordingly, the angle formed between the first sidewall 812 and the first cut surface 814 may be less than 90 degrees. In some embodiments, the slope of the tangent to the first cut surface 814 at the point where the first sidewall 812 and the first cut surface 814 are connected to each other may be less than 90 degrees.

Similarly, the second cut portion 820 may include a second sidewall 822 parallel to or substantially parallel to the movement axis 750 of the punch 730, and a second cut surface 824 extending from the second sidewall 822 in the width direction of the punch 730. The second cut surface 824 may be in the form of a curved surface that is recessed toward the inside of the punch 730 with respect to the movement axis 750 of the punch 730. Accordingly, the angle formed between the second sidewall 822 and the second cut surface 824 may be less than 90 degrees. In some embodiments, the slope of the tangent of the second cut surface 824 at the point where the second sidewall 822 and the second cut surface 824 are connected to each other may be less than 90 degrees.

In an embodiment, the height of the first sidewall 812 of the first cut portion 810 may be different from the height of the second sidewall 822 of the second cut portion 820. Accordingly, a height difference ($\Delta h$) may be formed between the first sidewall 812 and the second sidewall 822.

In an embodiment, the timing at which the substrate is cut by the first cut portion 810 may be different from the timing at which the substrate is cut by the second cut portion 820. In some embodiments, as the punch 730 moves downward, the second cut portion 820, which has a greater (e.g., a higher or a larger) sidewall height, may cut the substrate while coming into contact with the substrate. Thereafter, as the punch 730 additionally moves downward, the first cut portion 810 may cut the substrate while coming into contact with the substrate. In some embodiments, after the second portion of the substrate (e.g., the second portion 744 in FIG. 7) is cut by the second cut portion 820, the first portion of the substrate (e.g., the first portion 742 of FIG. 7) may be cut by the first cut portion 810. In this case, a scrap having a width (w) between the first portion and the second portion may be formed.

FIG. 8 illustrates that the first cut surface 814 and the second cut surface 824 are smoothly connected to each other without a step therebetween, but the present disclosure is not limited thereto. In some embodiments, a step may be formed between the first cut surface 814 and the second cut surface 824. In some embodiments, the first cut surface 814 and the second cut surface 824 may be formed in the form of a curved surface up to a point (e.g., a specific or predetermined point) inside the punch 730, and the surface after the point may be connected in the form of a flat or substantially flat surface. Each of the first cut surface 814 and the second cut surface 824 forms a curved surface recessed toward the inside of the punch 730 in the vicinity extending from the first sidewall 812 and the second sidewall 822, and the structure of the cut surface may be variously modified as needed or desired (cf. description of FIG. 4).

In an embodiment, the first cut surface 814 may form a curved surface in the vicinity extending from the first sidewall 812, and the second cut surface 824 may form a flat or substantially flat surface in the vicinity extending from the second sidewall 822. In other embodiments, the second cut surface 824 may form a curved surface in the vicinity extending from the second sidewall 822, and the first cut surface 814 may form a flat or substantially flat surface in the vicinity extending from the first sidewall 812. In some embodiments, at least one of the first cut surface 814 or the second cut surface 824 may form a curved surface.

By appropriately modifying the curvature of the first cut surface 814 and/or the second cut surface 816 that is recessed toward the inside of the punch 730, the first cut portion 810 and/or the second cut portion 820 may form a structure for transmitting a shear force to the substrate.

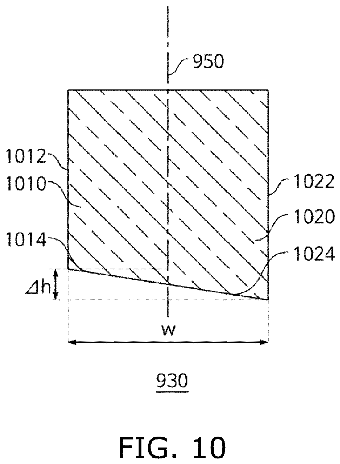

FIG. 9 illustrates an example of a punching device 900 according to an embodiment of the present disclosure. FIG. 10 illustrates an enlarged view showing a punch 930 of FIG. 9 according to an embodiment of the present disclosure.

Referring to FIG. 9, the punching device 900 includes a die 910, a stripper 920, and a punch 930. Hereinafter with reference to FIGS. 9 and 10, redundant description as those described above with respect to the other figures may not be repeated.

Referring to FIGS. 9 and 10, the punch 930 includes a first cut portion 1010 and a second cut portion 1020 formed in different shapes from each other. The first cut portion 1010 and the second cut portion 1020 may be arranged side-by-side with each other in the width direction of the punch 930.

In an embodiment, the first cut portion 1010 may include a first sidewall 1012 parallel to or substantially parallel to a movement axis 950 of the punch 930, and a first cut surface 1014 extending from the first sidewall 1012 in the width direction of the punch 930. The angle formed between the first sidewall 1012 and the first cut surface 1014 may be 90 degrees or more.

Similarly, the second cut portion 1020 may include a second sidewall 1022 parallel to or substantially parallel to the movement axis 950 of the punch 930, and a second cut surface 1024 extending from the second sidewall 1022 in the width direction of the punch 930. The angle formed between the second sidewall 1022 and the second cut surface 1024 may be less than 90 degrees.

In an embodiment, the height of the first sidewall 1012 of the first cut portion 1010 may be different from the height of the second sidewall 1022 of the second cut portion 1020. Accordingly, a height difference ($\Delta h$) may be formed between the first sidewall 1012 and the second sidewall 1022.

In an embodiment, the timing at which the substrate is cut by the first cut portion 1010 may be different from the timing at which the substrate is cut by the second cut portion 1020. In some embodiments, as the punch 930 moves downward, the second cut portion 1020, which has a greater (e.g., a higher or a larger) sidewall height, may cut the substrate while coming into contact with the substrate. Thereafter, as the punch 930 additionally moves downward, the first cut portion 1010 may cut the substrate while coming into contact with the substrate. In some embodiments, after the second portion of the substrate (e.g., the second portion 944 in FIG. 9) is cut by the second cut portion 1020, the first portion of the substrate (e.g., the first portion 942 of FIG. 9) may be cut by the first cut portion 1010. In this case, a scrap having a width (w) between the first portion and the second portion may be formed.

FIG. 10 illustrates that the angle formed by the first sidewall 1012 and the first cut surface 1014 is greater than 90 degrees, and the angle formed by the second sidewall 1022 and the second cutting surface 1024 is less than 90 degrees, but the present disclosure is not limited thereto. In some embodiments, one of the angle formed by the first sidewall 1012 and the first cut surface 1014 or the angle formed by the second sidewall 1022 and the second cut surface 1024 is less than 90 degrees, and the other thereof is 90 degrees or more. Therefore, the structure of the cut surface may be variously modified as needed or desired (cf. description of FIG. 4).

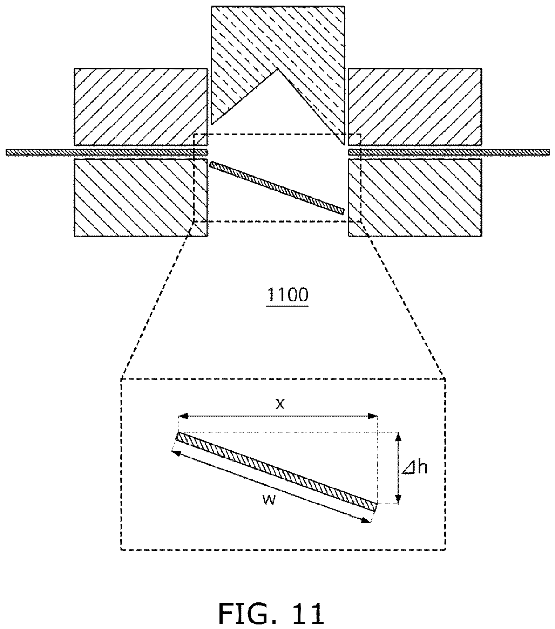

FIG. 11 illustrates a ratio between a height difference ($\Delta h$) of a first cut portion and a second cut portion and a width (w) of a scrap according to an embodiment of the present disclosure.

In an embodiment, a punching device 1100 may include a die having a discharge portion for discharging a scrap, a stripper having a punch accommodation portion, and a punch. In an embodiment, the punching device 1100 may cut a substrate. In some embodiments, the stripper pressurizes and fixes the substrate disposed on the upper surface of the die, and the punch moves downward so as to pass through the punch accommodation portion, thereby cutting the substrate. A scrap formed in a case where the substrate is cut may be discharged through the discharge portion.

In an embodiment, the discharge portion and/or the punch may be formed in a shape corresponding to a desired standard (e.g., a predetermined standard). For example, the discharge portion and/or the punch may correspond to the cut shape of the substrate. Similarly, the punch accommodation portion may be formed to correspond to the shape of the punch so as to accommodate the punch. Accordingly, the shape of the scrap formed by the punch may also correspond to the shape of the discharge portion.

In an embodiment, the punch has two sidewalls of different heights with respect to a direction of a movement axis of the punch, and thus, the timings at which the substrate is cut by the cut portions on opposite sides of the punch may be different from each other. Accordingly, the scrap formed by cutting the substrate may fall off in an inclined state.

In an embodiment, the orthographic length (x) of the scrap width may be calculated according to Equation 1 below using the Pythagorean theorem. In Equation 1, x is the orthogonal length of the scrap width, $\Delta h$ is the difference in height of the sidewalls of the cut portions on opposite sides, and w is the scrap width. The orthographic length (x) of the scrap width may refer to the orthographic length of the scrap with respect to a plane perpendicular to or substantially perpendicular to the movement axis of the punch.

<div align="center">Equation 1:</div>

$$x^2 = w^2 - \Delta h^2$$

Referring to Equation 1, in a case where the height difference ($\Delta h$) in the sidewalls between the cut portions on opposite sides is 1 mm, examples of the scrap width (w), the orthographic length (x) of the scrap width, and the difference (w-x) between the scrap width and the orthographic length of the scrap width are shown in Table 1 below. However, the present disclosure is not limited thereto, and the height difference ($\Delta h$) in the sidewalls may have any suitable value from 0.8 mm to 1.2 mm. In some embodiments, the height difference ($\Delta h$) in the sidewalls may have a value out of (e.g., different from) the corresponding range.

<div align="center">Table 1:</div>

| $\Delta h$(mm) | w(mm) | x(mm) | w-x(mm) |
|---|---|---|---|
| 1 | 2 | about 1.73 | about 0.27 |
| 1 | 3 | about 2.83 | about 0.17 |
| 1 | 4 | about 3.87 | about 0.13 |
| 1 | 5 | about 4.90 | about 0.1 |
| 1 | 6 | about 5.92 | about 0.08 |
| 1 | 7 | about 6.93 | about 0.07 |

Referring to Table 1, the ratio (w/$\Delta h$) of the scrap width (w) to the height difference ($\Delta h$) in the sidewalls between the cut portions on opposite sides formed by cutting the substrate may be 2 to 7. For example, the ratio (w/$\Delta h$) of the scrap width (w) to the height difference ($\Delta h$) in the sidewalls between the cut portions on opposite sides may be 5. In this case, in a case assuming that the scrap width (w) is 5 mm and the height difference ($\Delta h$) in the sidewalls between the cut portion on opposite sides is 1 mm, the orthographic length (x) of the scrap width is about 4.90 mm, which is shorter than the scrap width (w), and the minor axis length (w-x) may be about 0.1 mm. In some embodiments, as the scrap falls off in an inclined state, the orthographic length (x) of the scrap width may be shortened compared to the scrap width (w).

In Table 1, only cases where the ratio (w/Δh) of the scrap width (w) to the height difference (Δh) in the sidewalls between the two cut portions are 2, 3, 4, 5, 6, and 7 are shown, but the ratio of the scrap width (w) to the height difference (Δh) in the sidewalls between the cut portions on opposite sides may be appropriately modified as needed or desired by various variables.

In an embodiment, the height difference (Δh) in the sidewalls between the cut portions on opposite sides may be 0.8 mm to 1.2 mm. In this case, the scrap width (w) may be 2 mm to 6 mm. In an embodiment, the height difference (Δh) in the sidewalls between the cut portions on opposite sides may be 1 mm, and the scrap width (w) may be 5 mm. In this case, more effective scrap discharge may be possible. In a case where the ratio (w/Δh) of the scrap width (w) to the height difference (Δh) in the sidewalls between the cut portions on opposite sides is 5, more effective scrap discharge may be possible.

Due to the height difference (Δh) in the sidewalls between the cut portions on opposite sides, the orthographic length (x) of the scrap width may be shorter than the scrap width (w). However, the present disclosure is not limited to the aforementioned values, and the height difference (Δh) in the sidewalls between the cut portions on opposite sides and the scrap width (w) may be appropriately modified by various suitable variables, such as the spacing between the electrode plates applied to the substrate, the size of the punch, and/or the like.

According to some embodiments described above, the scrap may be smoothly discharged through the discharge portion as the scrap falls off in an inclined state. Accordingly, cases where the scrap is not smoothly discharged and is piled up in the punching device may be prevented or substantially prevented. For example, low voltage defects, short circuit defects, and capacity defects, which may occur in a case where the scrap flows into the battery, may be prevented or substantially prevented.

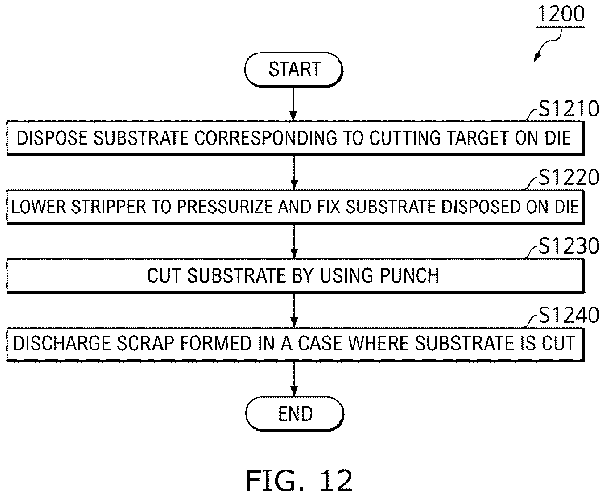

FIG. 12 illustrates a flowchart showing an example of a punching method according to an embodiment of the present disclosure.

In an embodiment, a punching method 1200 may be performed by a punching device (e.g., the punching device 100 of FIG. 1) that includes a die, a stripper, and a punch.

The punching method 1200 may start, and the substrate corresponding to a cutting target is disposed on the die (S1210). Thereafter, the punching device lowers the stripper to pressurize and fix the substrate disposed on the die (S1220).

In an embodiment, the punching device cuts the substrate by using the punch (S1230). The punch includes a first cut portion and a second cut portion formed in different shapes from each other with respect to the movement axis of the punch. For example, the height (e.g., a first height) of the sidewall of the first cut portion may be different from the height (e.g., a second height) of the sidewall of the second cut portion.

In an embodiment, the punching device may lower the punch so as to cut the substrate by using the punch. Thereafter, the punching device may cut the first portion of the substrate with the first cut portion and then cut the second portion of the substrate with the second cut portion. In some embodiments, the punching device may cut the second portion of the substrate with the second cut portion and then cut the first portion of the substrate with the first cut portion.

In some embodiments, the width (w) between the first portion and the second portion may be twice or more the height difference (Δh) in the sidewalls between the first cut portion and the second cut portion. In some embodiments, the height difference (Δh) between the first cut portion and the second cut portion may be 0.8 mm to 1.2 mm. In some embodiments, the width (w) between the first portion and the second portion may be 2 mm to 6 mm. In some embodiments, the height difference (Δh) between the first cut portion and the second cut portion may be 1 mm, and the width (w) between the first portion and the second portion may be 5 mm.

In an embodiment, the punching device discharges the scrap formed in a case where the substrate is cut (S1240), and the method 1200 may end. In this case, the first portion and the second portion are cut at different timings from each other due to the height difference (Δh) between the first cut portion and the second cut portion, such that the scrap may be discharged in an inclined state.

Although the present disclosure has been described above with respect to embodiments thereof, the present disclosure is not limited thereto. Various modifications and variations can be made thereto by those skilled in the art within the scope of the appended claims.

**DESCRIPTION OF SOME REFERENCE SYMBOLS**

100: punching device
110: first mold

112: first base plate
114: stripper plate
116: punch
118: stripper
118a: punch accommodation portion
120: second mold
122: die
122a: discharge portion
122: second base plate

## Claims

1. A punching device (300, 500, 700, 900) comprising:

   a die (310, 510, 710, 910) configured to receive a substrate (340, 540, 740, 940) corresponding to a cutting target disposed thereon;
   a stripper (320, 520, 720, 920) spaced from and facing the die (310, 510, 710, 910), and configured to move toward the substrate (340, 540, 740, 940) to pressurize and fix the substrate (340, 540, 740, 940) on the die (310, 510, 710, 910); and
   a punch (330, 530, 730, 930) configured to move toward the substrate (340, 540, 740, 940) to cut the substrate (340, 540, 740, 940) to form a scrap,
   wherein the punch (330, 530, 730, 930) comprises a first cut portion (410, 610, 810, 1010) and a second cut portion (420, 620, 820, 1020) having different shapes from each other with respect to a movement axis (350, 550, 750, 950) of the punch (330, 530, 730, 930).

2. The punching device (300, 500, 700, 900) as claimed in claim 1, wherein the first cut portion (410, 610, 810, 1010) and the second cut portion (420, 620, 820, 1020) are configured to cut a first portion (342, 542, 742, 942) and a second portion (344, 544, 744, 944) of the substrate (340, 540, 740, 940), respectively, as the punch (330, 530, 730, 930) moves downward, and
   wherein the scrap formed by cutting the first portion (342, 542, 742, 942) and the second portion (344, 544, 744, 944) has a width (w) between the first portion (342, 542, 742, 942) and the second portion (344, 544, 744, 944).

3. The punching device (300, 500, 700, 900) as claimed in any one of the preceding claims, wherein a timing at which the first portion (342, 542, 742, 942) is cut and a timing at which the second portion (344, 544, 744, 944) is cut are different from each other.

4. The punching device (300, 500, 700, 900) as claimed in claim 3, wherein the timing at which the first portion (342, 542, 742, 942) is cut and the timing at which the second portion (344, 544, 744, 944) is cut are different from each based on a height difference ($\Delta h$) between sidewalls of the first cut portion (410, 610, 810, 1010) and the second cut portion (420, 620, 820, 1020).

5. The punching device (300, 500, 700, 900) as claimed in claim 4, wherein the width (w) between the first portion (342, 542, 742, 942) and the second portion (344, 544, 744, 944) is four times or more the height difference ($\Delta h$) between the sidewalls of the first cut portion (410, 610, 810, 1010) and the second cut portion (420, 620, 820, 1020).

6. The punching device (300, 500, 700, 900) as claimed in claim 4 or 5, wherein the height difference ($\Delta h$) between the sidewalls of the first cut portion (410, 610, 810, 1010) and the second cut portion (420, 620, 820, 1020) is between 0.8 mm and 1.2 mm.

7. The punching device (300, 500, 700, 900) as claimed in any one of claims 2 to 6, wherein the width (w) between the first portion (342, 542, 742, 942) and the second portion (344, 544, 744, 944) is between 2 mm and 6 mm.

8. The punching device (300, 500, 700, 900) as claimed in any one of the preceding claims, wherein the first cut portion (410, 610, 810, 1010) comprises:

   a first sidewall (412, 612, 812, 1012) parallel to the movement axis (350, 550, 750, 950) of the punch (330, 530, 730, 930); and

a first cut surface (414, 614, 814, 1014) extending from the first sidewall (412, 612, 812, 1012) in a width direction of the punch (330, 530, 730, 930), and

wherein the second cut portion (420, 620, 820, 1020) comprises:

a second sidewall (422, 622, 822, 1022) parallel to the movement axis (350, 550, 750, 950) of the punch (330, 530, 730, 930); and

a second cut surface (424, 624, 824, 1024) extending from the second sidewall (422, 622, 822, 1022) in the width direction of the punch (330, 530, 730, 930).

9. The punching device (500) as claimed in claim 8, wherein each of an angle between the first sidewall (612) and the first cut surface (614) of the first cut portion (610) and an angle between the second sidewall (622) and the second cut surface (624) of the second cut portion (620) is 90 degrees.

10. The punching device (300) as claimed in claim 8, wherein each of an angle between the first sidewall (412) and the first cut surface (414) of the first cut portion (410) and an angle between the second sidewall (422) and the second cut surface (424) of the second cut portion (420) is less than 90 degrees, and wherein the first cut surface (414) and the second cut surface (424) are recessed toward an inside of the punch (330).

11. The punching device (700) as claimed in claim 8, wherein each of an angle between the first sidewall (812) and the first cut surface (814) of the first cut portion (810) and an angle between the second sidewall (822) and the second cut surface (824) of the second cut portion (820) is less than 90 degrees, and wherein at least one of the first cut surface (814) or the second cut surface (824) is in the form of a curved surface recessed toward an inside of the punch (730).

12. The punching device (900) as claimed in claim 8, wherein an angle between the first sidewall (1012) and the first cut surface (1014) of the first cut portion (1010) is 90 degrees or more, and wherein an angle between the second sidewall (1022) and the second cut surface (1024) of the second cut portion (1020) is less than 90 degrees.

13. The punching device (300, 500, 700, 900) as claimed in any one of the preceding claims, wherein the stripper (320, 520, 720, 920) has a punch accommodation portion (322, 522, 722, 922) configured to accommodate the punch (330, 530, 730, 930), and wherein the punch accommodation portion (322, 522, 722, 922) has a shape of a through-hole through which the punch (330, 530, 730, 930) is configured to be inserted via the stripper (320, 520, 720, 920).

14. The punching device (300, 500, 700, 900) as claimed in claim 13, wherein the die (310, 510, 710, 910) comprises a discharge portion (312, 512, 712, 912) extending in a direction corresponding to the punch accommodation portion (322, 522, 722, 922) to communicate with the punch accommodation portion (322, 522, 722, 922), and wherein the first cut portion (410, 610, 810, 1010) and the second cut portion (420, 620, 820, 1020) are configured such that the scrap is cut to be discharged through the discharge portion (312, 512, 712, 912) in an inclined state.

15. A punching method comprising:

Disposing (S1210) a substrate (340, 540, 740, 940) corresponding to a cutting target on a die (310, 510, 710, 910);
Lowering (S1220) a stripper (320, 520, 720, 920) to pressurize and fix the substrate (340, 540, 740, 940) disposed on the die (310, 510, 710, 910);
Cutting (S1230) the substrate (340, 540, 740, 940) by using a punch (330, 530, 730, 930); and
Discharging (S1240) a scrap formed by the cutting of the substrate (340, 540, 740, 940),
wherein the punch (330, 530, 730, 930) comprises a first cut portion (410, 610, 810, 1010) and a second cut portion (420, 620, 820, 1020) having different shapes from each other with respect to a movement axis (350, 550, 750, 950) of the punch (330, 530, 730, 930).

FIG. 1

FIG. 2

FIG. 3

FIG. 4

FIG. 5

FIG. 6

FIG. 7

FIG. 8

FIG. 9

FIG. 10

1100

FIG. 11

1200

START

S1210
DISPOSE SUBSTRATE CORRESPONDING TO CUTTING TARGET ON DIE

S1220
LOWER STRIPPER TO PRESSURIZE AND FIX SUBSTRATE DISPOSED ON DIE

S1230
CUT SUBSTRATE BY USING PUNCH

S1240
DISCHARGE SCRAP FORMED IN A CASE WHERE SUBSTRATE IS CUT

END

FIG. 12

Europäisches
Patentamt

European
Patent Office

Office européen
des brevets

## EUROPEAN SEARCH REPORT

**Application Number**

EP 25 16 1576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 4 012 975 A (LALONE BARRY GRANT) 22 March 1977 (1977-03-22)<br>* paragraph [0114] - paragraph [0119]; figures 6,7 *<br>- - - - - | 1-9, 13-15<br>10-12 | INV.<br>B21D28/26<br>B21D28/34 |
| X<br>A | US 2018/229392 A1 (FRENKEN EGBERT [DE] ET AL) 16 August 2018 (2018-08-16)<br>* paragraph [0114] - paragraph [0117]; figures 6,7 *<br>- - - - - | 1-8, 13-15<br>9-12 | |
| Y | US 2012/048093 A1 (MARKS JOEL S [US]) 1 March 2012 (2012-03-01)<br>* paragraph [0053] - paragraph [0057]; figure 3 *<br>- - - - - | 10-12 | |

**TECHNICAL FIELDS SEARCHED (IPC)**

B21D

The present search report has been drawn up for all claims

| Place of search | Date of completion of the search | Examiner |
|---|---|---|
| Munich | 30 May 2025 | Vesterholm, Mika |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 1576

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2025

| Patent document cited in search report | | Publication date | Patent family member(s) | | Publication date |
|---|---|---|---|---|---|
| US 4012975 | A | 22-03-1977 | NONE | | |
| US 2018229392 | A1 | 16-08-2018 | DE | 102015112724 A1 | 09-02-2017 |
| | | | EP | 3331655 A2 | 13-06-2018 |
| | | | US | 2018229392 A1 | 16-08-2018 |
| | | | WO | 2017021363 A2 | 09-02-2017 |
| US 2012048093 | A1 | 01-03-2012 | CN | 101277796 A | 01-10-2008 |
| | | | JP | 2009505849 A | 12-02-2009 |
| | | | TW | I374079 B | 11-10-2012 |
| | | | US | 2007044618 A1 | 01-03-2007 |
| | | | US | 2007044623 A1 | 01-03-2007 |
| | | | US | 2007267472 A1 | 22-11-2007 |
| | | | US | 2012048093 A1 | 01-03-2012 |

EPO FORM P0459

For more details about this annex : see Official Journal of the European Patent Office, No. 12/82